Europäisches Patentamt

European Patent Office

Office européen des brevets

(11) Publication number: **0 406 430 A1**

# EUROPEAN PATENT APPLICATION
## published in accordance with Art. 158(3) EPC

(21) Application number: 89911091.0

(22) Date of filing: 09.10.89

(86) International application number:
PCT/JP89/01040

(87) International publication number:
WO 90/04817 (03.05.90 90/10)

(51) Int. Cl.⁵: **G05B 19/403, G06F 3/14**

---

(30) Priority: 27.10.88 JP 271545/88

(43) Date of publication of application:
09.01.91 Bulletin 91/02

(84) Designated Contracting States:
**DE FR GB**

(71) Applicant: **FANUC LTD**
**3580, Shibokusa Aza-Komanba Oshinomura**
**Minamitsuru-gun Yamanashi 401-05(JP)**

(72) Inventor: **FUJITA, Naoki Fanuc Mansion**
**Harimomi 6-203**
**3537-1, Shibokusa Oshinomura**
**Minamitsuru-gun**
**Yamanashi 401-05(JP)**
Inventor: **MATSUMURA, Teruyuki**
**38-8, Matsugaya Hachioji-shi**
**Tokyo 192-03(JP)**
Inventor: **MURATA, Koichi**
**1-3-32-504, Nikkocho Fuchu-shi**
**Tokyo 183(JP)**

(74) Representative: **Brunner, Michael John et al**
**GILL JENNINGS & EVERY 53-64 Chancery**
**Laneane**
**London WC2A 1HN(GB)**

---

(54) SEARCH SYSTEM OF SHAPE CONSTITUENT ELEMENTS.

(57) This invention relates to a search system of shape constituent elements which searches shape constituent elements (3a ~ 3g) of a program in an interactive numeric control apparatus or an automatic programming apparatus. An element symbol (T) representing a specific shape constituent element (T) is inputted, a shape constituent element (T) corresponding to the element symbol (T) is searched from the program, the shape constituent element (T) is displayed on a display screen (1) and a cursor (5) is moved to the position of the shape constituent element (T).

DESCRIPTION

METHOD OF SEARCHING FOR A FIGURE ELEMENT

Technical Field

The present invention relates to a method of searching for a figure element in a program for an interactive numerical control device or automatic programming device, and more particularly, to a figure element searching method by which key operations are simplified.

Background Art

In interactive numerical control devices or automatic programming devices, a program is produced by inputting figures of parts in units of figure elements.

Specifically, to input figures of parts, symbolic keys for inputting straight lines, such as horizontal, vertical and slanting lines, and arcs, etc., are used to thereby create a machining program or the like, and thus since parts figures can be easily input, programs can be efficiently produced.

When correcting programs, for example, cursor moving keys are pressed to move the cursor to the position of a desired figure element, but since a program is usually composed of a large number of, for example, several tens, of figure elements, if the current position of the cursor is distant from the position of a desired figure element, the cursor moving keys must be pressed many times or for a long time.

## Disclosure of the Invention

The present invention was created in view of the above circumstances, and an object thereof is to provide a figure element searching method by which key operations are simplified.

To achieve the above object, the present invention provides a method of searching for a figure element in a program for an interactive numerical control device or automatic programming device, characterized by comprising the steps of inputting an element symbol representing a specific figure element, searching the program for the figure element specified by the element symbol, displaying the searched figure element on a display screen, and moving a cursor to the position of the searched figure element.

When an element symbol representing a specific figure element to be searched is input by a symbolic key, the program is searched for the figure element specified by the element symbol, the program part concerned is displayed on the screen, and simultaneously, the cursor is moved to the position of the searched figure element. Accordingly, the operator is not required to continuously press the cursor moving keys.

Brief Description of the Drawings

Figs. 1(a), 1(b), 1(c), 1(d) and 1(e) are diagrams of display screens, illustrating a figure element searching method according to one embodiment of the present invention;

Fig. 2 is a flowchart for carrying out the figure element searching method of the present invention; and

Fig. 3 is a schematic diagram showing hardware of an interactive numerical control device for carrying out the present invention.

Best Mode of Carrying Out the Invention

An embodiment of the present invention will be described with reference to the drawings.

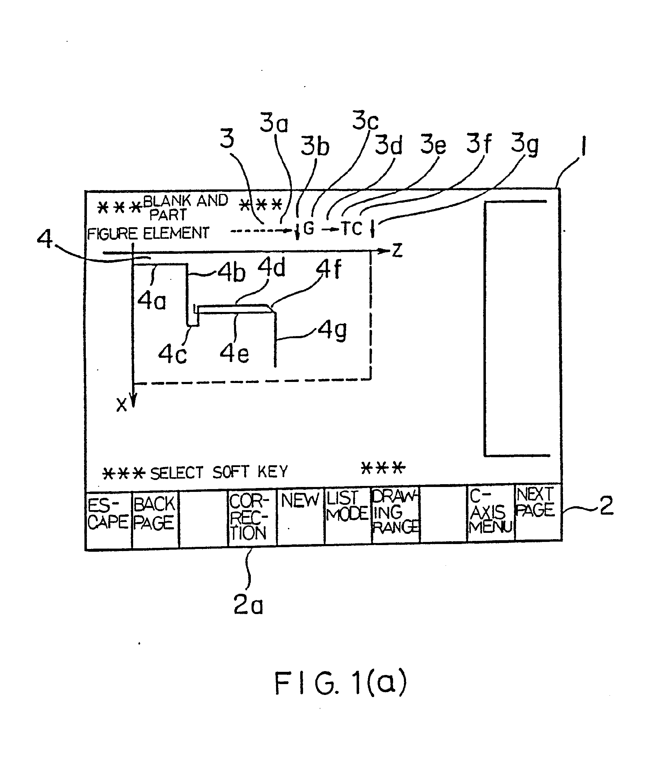

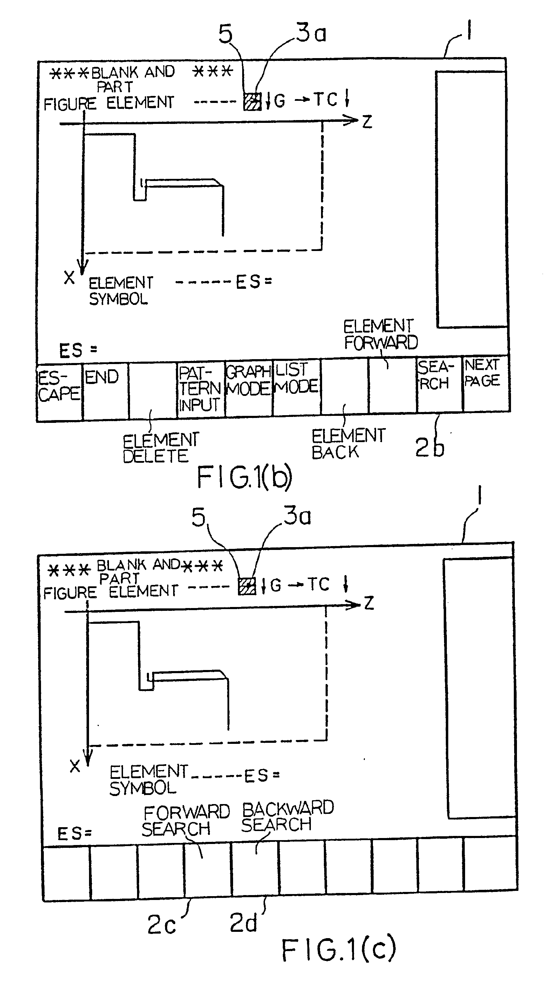

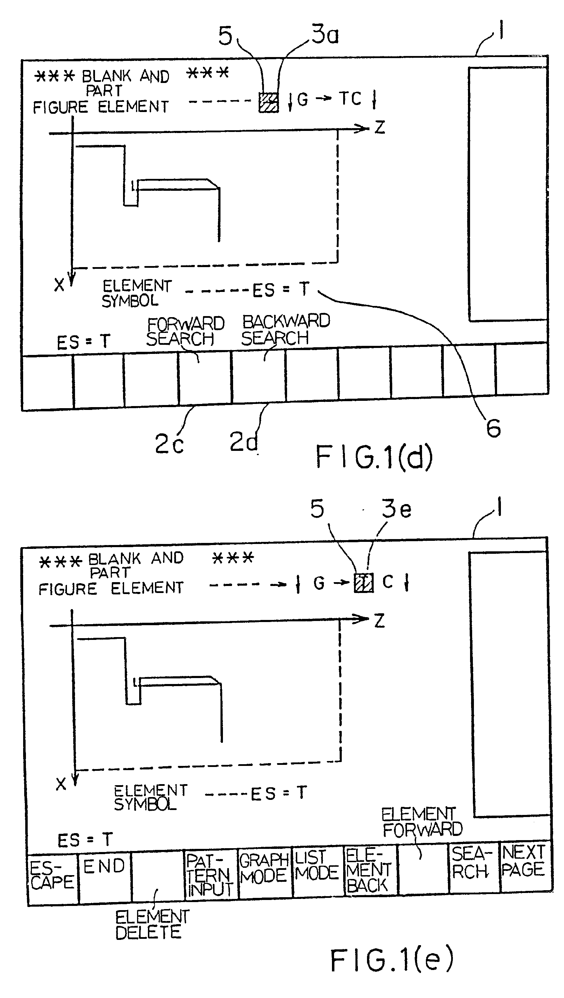

Figures 1(a), 1(b), 1(c), 1(d) and 1(e) are diagrams of display screens, illustrating a figure element searching method according to the present invention.

Figure 1(a) shows a screen displayed after a predetermined part figure is input. In Fig. 1, numeral 1 denotes a display screen, and 2 denotes software keys for executing various operations. Among these keys, a correction key 2a alone has a direct connection with the present invention, as described later, and therefore, a description of the other software keys is omitted. Numeral 3 denotes figure elements represented in terms of element symbols 3a, 3b, 3c, ..., wherein the horizontal arrow is an element symbol indicating a horizontal straight line, the vertical arrow is an element symbol indicating a vertical straight line, G is an element symbol indicating grooving, T is an element symbol indicating thread cutting, and C is an element symbol indicating chamfering. The figure elements are input by these element symbols, using not shown symbolic keys.

Numeral 4 denotes a part figure drawn in accordance with the figure elements 3a to 3g, wherein the figure element 3a corresponds to a straight line 4a and the figure element 3b corresponds to a straight line 4b, and so on.

An operation for searching for a specific figure element to correct a portion of the figure part 4 now will be described.

When the correction key 2a in Fig. 1(a) is pressed, the display screen 1 changes to that shown in Fig. 1(b). In Fig. 1(b), numeral 5 denotes a cursor which is located at the position of the figure element 3a.

Then, upon pressing the search key 2b, the display screen 1 changes to that shown in Fig. 1(c), wherein a forward search key 2c and a backward search key 2d are displayed.

Here, if the not shown symbolic key "T" and then the "INPUT" key are sequentially pressed, the display screen 1 is changed to that shown in Fig. 1(d), wherein the element symbol T is displayed as indicated at 6.

Subsequently, upon pressing the forward search key 2c, the cursor 5 is moved in the forward direction of the program to the position of the figure element 3e.

If the backward search key 2d is pressed instead of the forward search key 2c, the program can be searched in the backward direction.

In the above description, an element symbol specifying a figure element to be searched is input after the search key 2b is operated. Alternatively, the search key 2b may be pressed first and the element symbol then input. Also in this case, the figure element can be searched.

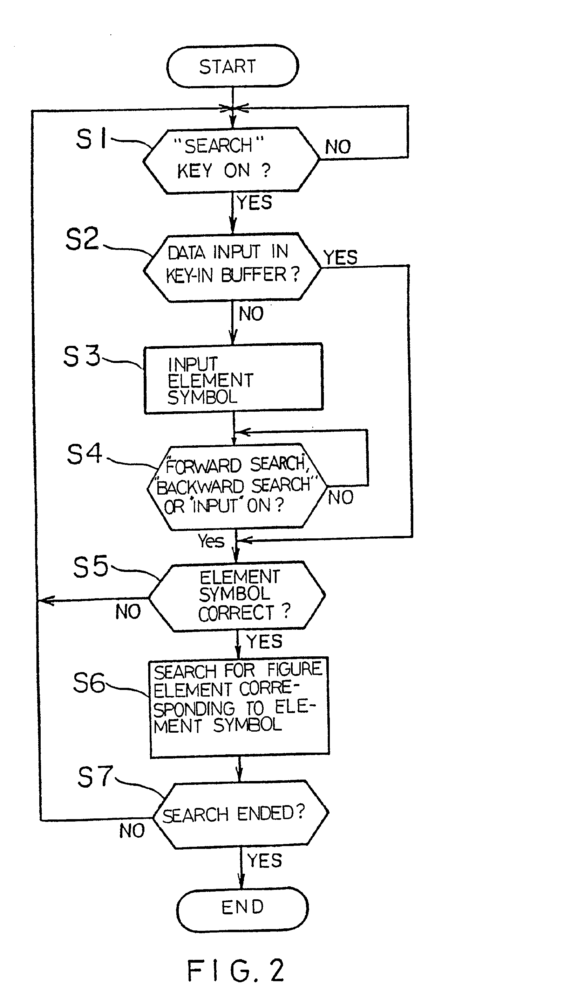

Figure 2 is a flowchart of a process for carrying out the figure element searching method of the present invention. In Fig. 2, the numbers following "S" represent step numbers.

[S1] It is determined whether or not the search key has been pressed. If the search key has been pressed, the flow proceeds to S2, and if not, the program stands by.

[S2] It is determined whether or not data has been input to a key-in buffer. If no data has been input, the flow proceeds to S3, and if data has been input, then the flow proceeds to S5.

[S3] An element symbol specifying a figure element to be searched is input.

[S4] It is determined whether the forward search key, the backward search key, or the "INPUT" key has been pressed. If any one of these keys has been pressed, S5 is executed, and if not, the program stands by for an operation of the keys.

[S5] It is determined whether or not the input data is a correct element symbol. If the input data is correct, S6 is executed, and if not, the flow returns to S1.

[S6] The figure element specified by the input element symbol is searched.

[S7] It is determined whether or not the search is ended. If the search is not ended, the program returns to S1, and if the search is ended, then the process is ended.

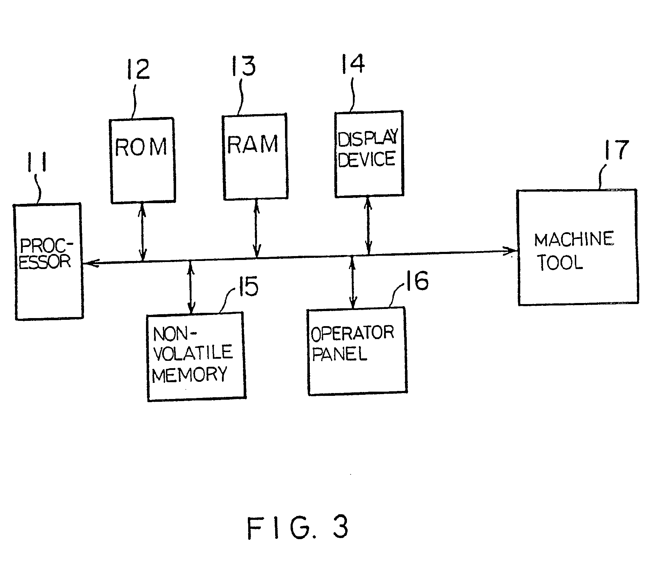

Figure 3 is a schematic diagram of hardware of an interactive numerical control device for carrying out the present invention. In the Fig. 3, numeral 11 denotes a processor for globally controlling the interactive numerical control device; 12 denotes a ROM for storing a system program; 13 denotes a RAM for storing various data; 14 denotes a display device such as a CRT or the like; 15 denotes a nonvolatile memory for storing a machining program, parameters and pitch error correction amounts, etc.; 16 denotes an operator panel; and 17 denotes a machine tool.

The above embodiment has been described with reference to an interactive numerical control device, but the present invention can be applied also to an automatic programming device.

According to the present invention, as described above, the required figure element can be retrieved by a simple key operation. Accordingly, when a portion of a part figure in a program is to be corrected, for example, it is unnecessary to press the cursor moving keys many times or for a long time, and thus the time required for the correction is shortened.

CLAIMS

1. A method of searching for a figure element in a program for one of an interactive numerical control device and an automatic programming device, characterized by comprising the steps of:

inputting an element symbol representing a specific figure element;

searching the program for the figure element specified by the element symbol; and

displaying the searched figure element on a display screen and moving a cursor to the position of the searched figure element.

2. A method according to claim 1, wherein the search is executed in one of a forward and backward direction of the program in accordance with a command.

***BLANK AND *** PART FIGURE ELEMENT - - - - - - → ↓G → TC↓

3  3a  3b  3c  3d  3e  3f  3g  1

4  4b  4d  4f  4a  4c  4e  4g

Z  X

*** SELECT SOFT KEY  ***

| ES-CAPE | BACK PAGE | | COR-REC-TION | NEW | LIST MODE | DRAW-ING RANGE | | C-AXIS MENU | NEXT PAGE |

2  2a

FIG. 1(a)

5    3a    I

\*\*\*BLANK AND    \*\*\*
PART
FIGURE ELEMENT ----    ▨ ↓G → TC ↓

→Z

ES=

X ↓ ELEMENT ----- ES=
SYMBOL

ES =

ELEMENT
FORWARD

| ES-<br>CAPE | END | | PAT-<br>TERN<br>INPUT | GRAPH<br>MODE | LIST<br>MODE | | | SEA-<br>RCH | NEXT<br>PAGE |
|---|---|---|---|---|---|---|---|---|---|

ELEMENT
DELETE

ELEMENT
BACK

2b

FIG.1(b)

5    3a    I

\*\*\* BLANK AND\*\*\*
PART
FIGURE ELEMENT ---- ▨ ↓G → TC ↓

→Z

X ↓ ELEMENT_____ES=
SYMBOL

ES=

FORWARD    BACKWARD
SEARCH     SEARCH

| | | | | | | | | | |
|---|---|---|---|---|---|---|---|---|---|

2c    2d

FIG.1(c)

**\*\*\* BLANK AND PART FIGURE ELEMENT \*\*\***

$$G \rightarrow TC$$

ELEMENT SYMBOL ----- ES = T

ES = T

FORWARD SEARCH     BACKWARD SEARCH

2c     2d

FIG.1(d)

**\*\*\* BLANK AND PART FIGURE ELEMENT \*\*\***

$$G \rightarrow C$$

ELEMENT SYMBOL ----- ES = T

ES = T

| ES-CAPE | END | | PAT-TERN INPUT | GRAPH MODE | LIST MODE | ELE-MENT BACK | | SEA-RCH | NEXT PAGE |

ELEMENT FORWARD

ELEMENT DELETE

FIG.1(e)

EP 0 406 430 A1

```
                    ┌──────────┐
                    │  START   │
                    └──────────┘
                          │
   S1 ─────  ⟨ "SEARCH"  KEY ON ? ⟩ ──── NO
                          │ YES
   S2 ─────  ⟨ DATA INPUT IN KEY-IN BUFFER ? ⟩ ──── YES
                          │ NO
   S3 ─────  ┌──────────────┐
             │   INPUT      │
             │   ELEMENT    │
             │   SYMBOL     │
             └──────────────┘
                          │
   S4 ─────  ⟨ "FORWARD SEARCH", "BACKWARD SEARCH" OR "INPUT" ON ? ⟩ ──── NO
                          │ Yes
   S5 ─────  ⟨ ELEMENT SYMBOL CORRECT ? ⟩ ──── NO
                          │ YES
   S6 ─────  ┌──────────────────────┐
             │ SEARCH FOR FIGURE    │
             │ ELEMENT CORRE-       │
             │ SPONDING TO ELE-     │
             │ MENT SYMBOL          │
             └──────────────────────┘
                          │
   S7 ─────  ⟨ SEARCH ENDED? ⟩ ──── NO
                          │ YES
                    ┌──────────┐
                    │   END    │
                    └──────────┘
```

F I G. 2

F I G. 3

International Application No   PCT/JP89/01040

## I. CLASSIFICATION OF SUBJECT MATTER (if several classification symbols apply, indicate all) 6

According to International Patent Classification (IPC) or to both National Classification and IPC

Int. Cl$^5$        G05B19/403, G06F3/14

## II. FIELDS SEARCHED

### Minimum Documentation Searched 7

| Classification System | Classification Symbols |
|---|---|
| IPC | G05B19/403, G06F3/14 |

### Documentation Searched other than Minimum Documentation to the Extent that such Documents are Included in the Fields Searched 8

| | |
|---|---|
| Jitsuyo Shinan Koho | 1971 - 1989 |
| Kokai Jitsuyo Shinan Koho | 1971 - 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 63-18406 (Fanuc Ltd.), 26 January 1988 (26. 01. 88), Page 3, lower right column, line 1 to page 4, lower right column, line 12, (Family: none) | 1, 2 |
| A | JP, A, 61-188586 (International Business Machines Corp.), 22 August 1986 (22. 08. 86), Page 3, lower left column, line 12 to page 4, lower left column, line 11 & EP, A, 191382 | 1, 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 15, 1989 (15. 12. 89) | January 16, 1990 (16. 01. 90) |

| International Searching Authority | Signature of Authorized Officer |
|---|---|
| Japanese Patent Office | |